# EUROPEAN PATENT APPLICATION

(11) **EP 2 879 286 A1**
(43) Date of publication of application: **03.06.2015**
(21) Application number: 14195504.7
(22) Date of filing: 28.11.2014
(51) Int. Cl.: H02M 7/487

(54) **Five-level rectifier**

(30) Priority: 02.12.2013 CN 201310636832
(71) Applicant: Delta Electronics (Shanghai) Co., Ltd., 201209 Shanghai (CN)
(72) Inventor: Ying, Jian-Ping, 201209 Pudong, (CN); Wang, Ming, 201209 Pudong, (CN); Zhang, Yi, 201209 Pudong, (CN); Gan, Hong-Jian, 201209 Pudong, (CN); Zheng, Jian-Fei, 201209 Pudong, (CN)
(74) Representative: Boult Wade Tennant

(57) **Abstract**

Disclosed herein is a five-level rectifier that includes first, second, third, fourth power semiconductor switches, first and second DC bus capacitors, a phase capacitor, and first, second, third and fourth diode modules. The first, second, third and fourth diode modules are connected in series, the first and second DC bus capacitors are connected in series, and the second and third power semiconductor switches are connected in series. The first diode module is connected to the first DC bus capacitor and the first power semiconductor switch, and the fourth diode module is connected to the second DC bus capacitor and the fourth power semiconductor switch. The phase capacitor has a terminal connected to the first and second power semiconductor switches, and another terminal connected to the third and fourth power semiconductor switches.

## Description

### BACKGROUND

### Field of Invention

The present invention relates to multi-level rectifiers. More particularly, the present invention relates to five-level rectifiers.

### Description of Related Art

With continuous development of power electronics and control technology, the demand for strong power electronic converters, such as motor speed control, new energy and smart grid, etc., is increased in many areas. The development of power electronic converters trends towards high voltage, high power, high power density, high reliability, low cost and so forth. Compared with two-level, multi-level conversion technology has lower harmonics and electromagnetic interference, better power quality, etc., and can effectively reduce filter size and cost. But, a multi-level power converter has a large number of switches, and its control logic is more complex. Therefore, further promotion and application of the multi-level conversion technology is affected adversely.

For improving the level of voltage converters, a variety of multi-level technology has been widely studied and applied, such as neutral point clamped (NPC) multi-level technology, flying capacitor clamped multi-level technology, active neutral point clamped (ANPC) multi-level technology, cascaded H-bridge (CHB) multi-level technology, as well as modular multi-level converter (MMC) technology and so on. Although the foregoing technologies can be applied in five-level topology, at least 8 or more power semiconductor switches are needed. Due to a larger number of the power semiconductor switches, there are a lot of difficulties in controlling the power semiconductor switches. Furthermore, CHB or MMC technology applied in the five-level topology requires two separate direct-current (DC) voltage sources, which result in higher cost and the lower reliability.

In view of the foregoing, there exist problems and disadvantages in the related art for further improvement; however, those skilled in the art sought vainly for a suitable solution. In order to solve or circumvent above problems and disadvantages, there is an urgent need in the related field to reduce the number of the power semiconductor switches, thereby simplifying the control logic.

### SUMMARY

The following presents a simplified summary of the disclosure in order to provide a basic understanding to the reader. This summary is not an extensive overview of the disclosure and it does not identify key/critical components of the present invention or delineate the scope of the present invention. Its sole purpose is to present some concepts disclosed herein in a simplified form as a prelude to the more detailed description that is presented later.

In one aspect, the present disclosure provides simply structured five-level rectifiers that have less power semiconductor switches for simplifying the control logic, as well as improving harmonic and electromagnetic interference, and power quality.

In one embodiment, a five-level converter includes a first power semiconductor switch, a second power semiconductor switch, a third power semiconductor switch, a fourth power semiconductor switch, a fifth power semiconductor switch, a sixth power semiconductor switch, a first direct-current (DC) bus capacitor, a second DC bus capacitor, a phase capacitor, a first diode module and a second diode module. The first power semiconductor switch has a first end and a second end; the second power semiconductor switch has a first end and a second end; the third power semiconductor switch has a first end and a second end, where the second end of the second power semiconductor switch is connected to the first end of the third power semiconductor switch; the fourth power semiconductor switch has a first end and a second end; the fifth power semiconductor switch has a first end and a second end; the sixth power semiconductor switch has a first end and a second end; the first diode module has an anode and a cathode, where the anode of the first diode module, the first end of the first power semiconductor switch and the first end of the fifth power semiconductor switch are connected to each other; the first DC bus capacitor has a positive terminal and a negative terminal, where the positive terminal of the first DC bus capacitor is connected to the cathode of the first diode module; the second DC bus capacitor has a positive terminal and a negative terminal, where the negative terminal of the first DC bus capacitor, the positive terminal of the second DC bus capacitor, the second end of the fifth power semiconductor switch and the first end of the sixth power semiconductor switch are connected to each other; the phase capacitor has a positive terminal and a negative terminal, where the second end of the first power semiconductor switch, the first end of the second power semiconductor switch and the positive terminal of the phase capacitor are connected to each other, and the second end of the third power semiconductor switch, the first end of the fourth power semiconductor switch and the negative terminal of the phase capacitor are connected to each other; and the second diode module has an anode and a cathode, where the second end of the sixth power semiconductor switch, the second end of the fourth power semiconductor switch and the cathode of the second diode module are connected to each other, and the anode of the second diode module is connected to the negative terminal of the second DC bus capacitor.

In another embodiment, a three-phase five-level rectifier includes three phase bridge arms; each of the three phase bridge arms is aforesaid five-level rectifier, and the three phase bridge arms are connected in parallel.

In another embodiment, a five-level converter includes a first power semiconductor switch, a second power semiconductor switch, a third power semiconductor switch, a fourth power semiconductor switch, a first DC bus capacitor, a second DC bus capacitor, a phase capacitor, a first diode module, a second diode module, a third diode module, a fourth diode module. The first power semiconductor switch has a first end and a second end; the second power semiconductor switch has a first end and a second end; the third power semiconductor switch has a first end and a second end, where the second end of the second power semiconductor switch is connected to the first end of the third power semiconductor switch; the fourth power semiconductor switch has a first end and a second end; the first DC bus capacitor has a positive terminal and a negative terminal; the second DC bus capacitor has a positive terminal and a negative terminal; the first diode module has an anode and a cathode, wherein the positive terminal of the first DC bus capacitor is connected to the cathode of the first diode module; the second diode module has an anode and a cathode, where the anode of the first diode module, the cathode of the second diode module and the first end of the first power semiconductor are connected to each other; the third diode module has an anode and a cathode, where the negative terminal of the first DC bus capacitor, the positive terminal of the second DC bus capacitor, the anode of the second diode module and the cathode of the third diode module are connected to each other; the phase capacitor has a positive terminal and a negative terminal, where the second end of the first power semiconductor switch, the first end of the second power semiconductor switch and the positive terminal of the phase capacitor are connected to each other, and the second end of the third power semiconductor switch, the first end of the fourth power semiconductor switch and the negative terminal of the phase capacitor are connected to each other; the fourth diode module has an anode and a cathode, wherein the second end of the fourth power semiconductor switch, the anode of the third diode module and the cathode of the fourth diode module are connected to each other, and the anode of the fourth power semiconductor switch is connected to the negative terminal of the second DC bus capacitor.

In another embodiment, a three-phase five-level rectifier includes three phase bridge arms; each of the three phase bridge arms is aforesaid five-level rectifier, and the three phase bridge arms are connected in parallel.

In view of the foregoing, the technical solutions of the present disclosure result in significant advantageous and beneficial effects, compared with existing techniques. The present disclosure is directed to provide simply structured five-level rectifiers without energy feedback, in which each five-level rectifier has less power semiconductor switches for simplifying the control logic, as well as improving harmonic and electromagnetic interference, and power quality; each phase bridge arm requires only one DC voltage source. Accordingly, problems and disadvantages in conventional five-level pulse modulation rectifier technology are generally solved or circumvented by embodiments of the present invention.

Many of the attendant features will be more readily appreciated, as the same becomes better understood by reference to the following detailed description considered in connection with the accompanying drawings.

### BRIEF DESCRIPTION OF THE DRAWINGS

The present description will be better understood from the following detailed description read in light of the accompanying drawing, wherein:
Figure 1 is a circuit diagram illustrating one phase bridge arm of a five-level rectifier according to one embodiment of the present disclosure;
Figure 2 illustrates relation between current of aforesaid bridge arm of the five-level rectifier and voltage between a node (O) and a midpoint (N) as shown in Figure 1;
Figure 3 is a circuit diagram illustrating a three-phase five-level rectifier based on circuit topology of aforesaid bridge arm of the five-level rectifier of Figure 1;
Figure 4 is a circuit diagram illustrating one phase bridge arm of a five-level rectifier according to another embodiment of the present disclosure;
Figure 5 illustrates relation between current of aforesaid bridge arm of the five-level rectifier and voltage between a node (O) and a midpoint (N) as shown in Figure 4;
Figure 6 is a circuit diagram illustrating a three-phase five-level rectifier based on circuit topology of aforesaid bridge arm of the five-level rectifier of Figure 4;
Figures 7A, 7B and 7C respectively illustrate the circuit structure of the power semiconductor switch according to the first embodiment of the present disclosure;
Figures 8A, 8B and 8C respectively illustrate the circuit structure of a capacitor according to the first embodiment of the present disclosure; and
Figures 9A, 9B and 9C respectively illustrate the circuit structure of a diode module according to the first embodiment of the present disclosure.

### DETAILED DESCRIPTION

In the following detailed description, for purposes of explanation, numerous specific details are set forth in order to attain a thorough understanding of the disclosed embodiments. In accordance with common practice, the various described features/elements are not drawn to scale but instead are drawn to best illustrate specific features/elements relevant to the present invention. Also, like reference numerals and designations in the various drawings are used to indicate like elements/parts. Moreover, well-known structures and devices are schematically shown in order to simplify the drawing and to avoid unnecessary limitation to the claimed invention.

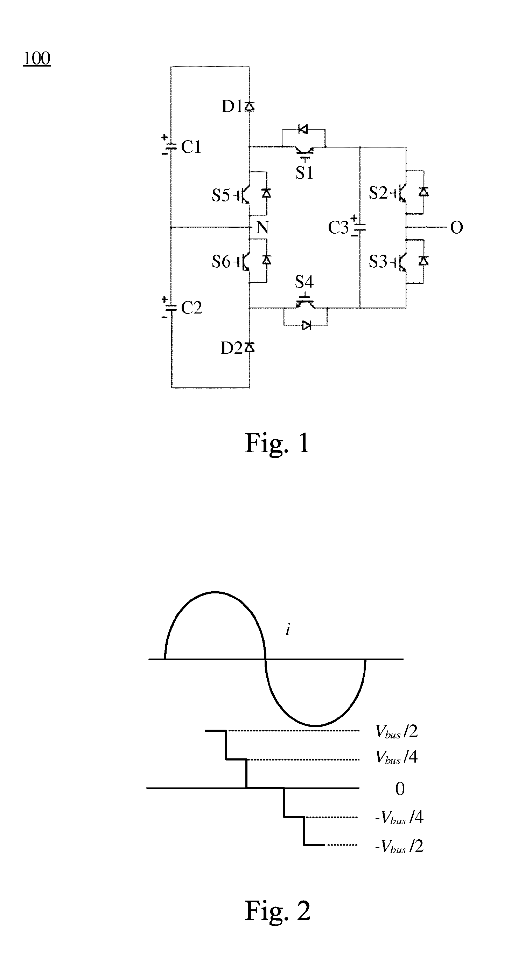

Figure 1 is a circuit diagram illustrating one phase bridge arm of a five-level rectifier 100 according to one embodiment of the present disclosure. As illustrated in Figure 1, the five-level converter 100 includes a first power semiconductor switch (S1), a second power semiconductor switch (S2), a third power semiconductor switch (S3), a fourth power semiconductor switch (S4), a fifth power semiconductor switch (S5), a sixth power semiconductor switch (S6), a first DC bus capacitor (C1), a second DC bus capacitor (C2), a phase capacitor (C3), a first diode module (D1) and a second diode module (D2).

In Figure 1, the first power semiconductor switch (S1) has a first end (e.g., a collector of IGBT) and a second end (e.g., an emitter of IGBT); the second power semiconductor switch (S2) has a first end and a second end; the third power semiconductor switch (S3) has a first end and a second end, where the second end of the second power semiconductor switch (S2) is connected to the first end of the third power semiconductor switch (S3); the fourth power semiconductor switch (S4) has a first end and a second end; the fifth power semiconductor switch (S5) has a first end and a second end; the sixth power semiconductor switch (S6) has a first end and a second end; the first diode module (D1) has an anode and a cathode, where the anode of the first diode module (D1), the first end of the first power semiconductor switch (S1) and the first end of the fifth power semiconductor switch (S5) are connected to each other; the first DC bus capacitor (C1) has a positive terminal and a negative terminal, where the positive terminal of the first DC bus capacitor (C1) is connected to the cathode of the first diode module (D1); the second DC bus capacitor (C2) has a positive terminal and a negative terminal, where the negative terminal of the first DC bus capacitor (C1), the positive terminal of the second DC bus capacitor (C2), the second end of the fifth power semiconductor switch (S5) and the first end of the sixth power semiconductor switch (S6) are connected to each other; the phase capacitor (C3) has a positive terminal and a negative terminal, where the second end of the first power semiconductor switch (S1), the first end of the second power semiconductor switch (S2) and the positive terminal of the phase capacitor (C3) are connected to each other, and the second end of the third power semiconductor switch (S3), the first end of the fourth power semiconductor switch (S4) and the negative terminal of the phase capacitor (C3) are connected to each other; and the second diode module (D2) has an anode and a cathode, where the second end of the sixth power semiconductor switch (S6), the second end of the fourth power semiconductor switch (S4) and the cathode of the second diode module (D2) are connected to each other, and the anode of the second diode module (D2) is connected to the negative terminal of the second DC bus capacitor (C2).

In use, the first DC bus capacitor (C1) and the second DC bus capacitor (C2) can be connected to a common DC bus so as to output DC voltage, the phase capacitor (C3) is configured to stabilize voltage, and a node (O) serves as one phase input terminal. A control module (not shown) outputs a driving signal to control on/off states of the power semiconductor switches (S1-S6) respectively, so that the five-level rectifier 100 can operate for rectification.

Compared to a conventional five-level converter with eight switches controlled by different driving signals in each phase, the five-level rectifier 100 as shown in Figure 1 only requires six switches controlled by less driving signals in each phase, so as to simplify the control logic.

In practice, each of the first power semiconductor switch (S1), the second power semiconductor switch (S2), the third power semiconductor switch (S3), the fourth power semiconductor switch (S4), the fifth power semiconductor switch (S5) and the sixth power semiconductor switch (S6) is an insulate gate bipolar transistor, a gate-turn-off thyristor, an integrated gate-commutated thyristor or the like, and persons having ordinary skill in the art would choose the component as desired. In addition, each of the first power semiconductor switch (S1), the second power semiconductor switch (S2), the third power semiconductor switch (S3), the fourth power semiconductor switch (S4), the fifth power semiconductor (S5) and the sixth power semiconductor switch (S6) has a body diode, so that the reverse current can be refluxed through the body diode when the power semiconductor switch is turned off.

For a more complete understanding of the five-level rectifier 100, and the works thereof, with reference to Figure 2, the parameters are defined as follows. When the current (*i*) flows into the rectifier in a positive direction, the current (*i*) flows out of the rectifier in a negative direction. A voltage across the first DC bus capacitor (C1) and a voltage across the second DC bus capacitor (C2) are V_{bus}/2 each, a voltage across the phase capacitor (C3) is V_{bus}/4, and an output phase voltage V_{ON} is a potential difference between the node (O) and a midpoint (N).

With reference to Figure 2, a table of the on/off states of switching components (e.g., power semiconductor switches and diode modules) and output voltage level is shown below:

| | S1 | S2 | S3 | S4 | S5 | S6 | D1 | D2 | V_{ON} |
|---|---|---|---|---|---|---|---|---|---|
| State 1 | ON | ON | OFF | OFF | OFF | OFF | ON | OFF | V_{bus}/2 |
| State 2 | ON | OFF | ON | OFF | OFF | OFF | ON | OFF | V_{bus}/4 |
| State 3 | OFF | ON | OFF | ON | OFF | ON | OFF | OFF | V_{bus}/4 |
| State 4 | OFF | OFF | ON | ON | OFF | ON | OFF | OFF | 0 |
| State 5 | ON | ON | OFF | OFF | ON | OFF | OFF | OFF | 0 |
| State 6 | ON | OFF | ON | OFF | ON | OFF | OFF | OFF | -V_{bus}/4 |
| State 7 | OFF | ON | OFF | ON | OFF | OFF | OFF | ON | -V_{bus}/4 |
| State 8 | OFF | OFF | ON | ON | OFF | OFF | OFF | ON | -V_{bus}/2 |

In State 1, the output phase voltage V_{ON} is V_{bus}/2, and the current (*i*) flows into the rectifier, where the first power semiconductor switch (S1) and the second power semiconductor switch (S2) are turned on, and therefore the current (*i*) flows into the positive terminal of the first DC bus capacitor (C1) through an anti-parallel diode of the first power semiconductor switch (S1), an anti-parallel diode of the second power semiconductor switch (S2) and the first diode module (D1).

In States 2 and 3, the output phase voltage V_{ON} is V_{bus}/4, and the current (*i*) flows into the rectifier, in which the phase capacitor (C3) is involved in the work, the phase capacitor (C3) may generate voltage fluctuations because of phase current. For maintaining voltage stability of the phase capacitor (C3), there is a need to provide charging and discharging paths for the phase capacitor (C3).

In State 2, the first power semiconductor switch (S1) and the third power semiconductor switch (S3) are turned on, and therefore the current (*i*) flows into the positive terminal of the first DC bus capacitor (C1) through the third power semiconductor switch (S3), the phase capacitor (C3) and the anti-parallel diode of the first power semiconductor switch (S1) and the first diode module (D1). At this time, the phase capacitor (C3) is discharged.

In State 3, the second power semiconductor switch (S2), the fourth power semiconductor switch (S4) and the sixth power semiconductor switch (S6) are turned on, and therefore the current (*i*) flows into the midpoint (N) of the bus capacitors through the anti-parallel diode of the second power semiconductor switch (S2), the phase capacitor (C3), the fourth power semiconductor switch (S4) and an anti-parallel diode of the sixth power semiconductor switch (S6). At this time, the phase capacitor (C3) is charged.

In State 4, the output phase voltage V_{ON} is zero, and the current (*i*) flows into the rectifier, in which the third power semiconductor switch (S3), the fourth power semiconductor switch (S4) and the sixth power semiconductor switch (S6) are turned on, and therefore the current (*i*) flows into the midpoint (N) of the bus capacitors through the third power semiconductor switch (S3), the fourth power semiconductor switch (S4) and the anti-parallel diode of the sixth power semiconductor switch (S6).

In State 5, the output phase voltage V_{ON} is zero, and the current (*i*) flows out of the rectifier, in which the first power semiconductor switch (S1), the second power semiconductor switch (S2) and the fifth power semiconductor switch (S5) are turned on, and therefore the current (*i*) flows out of the rectifier, the current (*i*) flows from the midpoint (N) of the bus capacitors to the node(O) through the anti-parallel diode of the fifth power semiconductor switch (S5), the first power semiconductor switch (S1) and the second power semiconductor switch (S2) sequentially.

In States 6 and 7, the output phase voltage V_{ON} is -V_{bus}/4, and the current (*i*) flows out of the rectifier, in which the phase capacitor (C3) is involved in the work. For maintaining voltage stability of the phase capacitor (C3), there is a need to provide charging and discharging paths for the phase capacitor (C3).

In State 6, the first power semiconductor switch (S1), the third power semiconductor switch (S3) and the fifth power semiconductor switch (S5) are turned on, and therefore the current (*i*) flows from the midpoint (N) of the bus capacitors to the node (O) through the anti-parallel diode of the fifth power semiconductor switch (S5), the first power semiconductor switch (S1), the phase capacitor (C3), the anti-parallel diode of the third power semiconductor switch (S3) sequentially. At this time, the phase capacitor (C3) is charged.

In State 7, the second power semiconductor switch (S2) and the fourth power semiconductor switch (S4) are turned on, and therefore the current (*i*) flows from the negative terminal of the second DC bus capacitor (C2) to the second diode module (D2), the anti-parallel diode of the fourth power semiconductor switch (S4), the phase capacitor (C3) and the second power semiconductor switch (S2) sequentially. At this time, the phase capacitor (C3) is discharged.

In State 8, the output phase voltage V_{ON} is -V_{bus}/2, and the current (*i*) flows out of the rectifier, where the third power semiconductor switch (S3) and the fourth power semiconductor switch (S4) are turned on, and therefore the current (*i*) flows from the negative terminal of the second DC bus capacitor (C2) to the second diode module (D2), the anti-parallel diode of the fourth power semiconductor switch (S4) and the anti-parallel diode of the third power semiconductor switch (S3) sequentially.

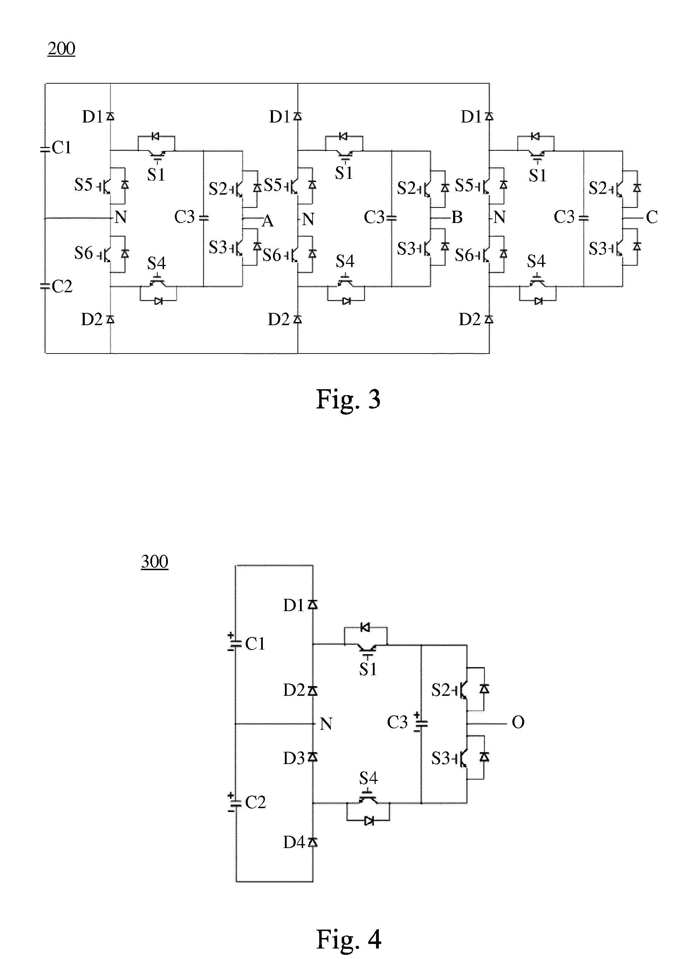

Figure 3 is a circuit diagram illustrating a three-phase five-level rectifier based on circuit topology of aforesaid bridge arm of the five-level rectifier of Figure 1. As illustrated in Figure 3, nodes (A), (B) and (C) are three phase input terminal. The midpoint N of each bridge arm (i.e., a connection point connects the second end of the fifth power semiconductor switch (S5) and the first end of the sixth power semiconductor switch (S6)) is connected to the midpoint N of the bus capacitors (i.e., a connection point connects the negative terminal of the first DC bus capacitor (C1) and the positive terminal of the second DC bus capacitor (C2)). Accordingly, each phase bridge arm requires only one DC voltage source, so as to solve or circumvent the problems and disadvantages in conventional CHB or MMC technology applied in the five-level topology.

Figure 4 is a circuit diagram illustrating one phase bridge arm of a five-level rectifier 300 according to another embodiment of the present disclosure. As illustrated in Figure 4, the five-level converter 300 includes a first power semiconductor switch (S1), a second power semiconductor switch (S2), a third power semiconductor switch (S3), a fourth power semiconductor switch (S4), a first DC bus capacitor (C1), a second DC bus capacitor (C2), a phase capacitor (C3), a first diode module (D1), a second diode module (D2), a third diode module (D3), a fourth diode module (D4).

In Figure 4, the first power semiconductor switch (S1) has a first end and a second end; the second power semiconductor switch (S2) has a first end and a second end; the third power semiconductor switch (S3) has a first end and a second end, where the second end of the second power semiconductor switch (S2) is connected to the first end of the third power semiconductor switch (S3); the fourth power semiconductor switch (S4) has a first end and a second end; the first DC bus capacitor (C1) has a positive terminal and a negative terminal; the second DC bus capacitor (C2) has a positive terminal and a negative terminal; the first diode module (D1) has an anode and a cathode, wherein the positive terminal of the first DC bus capacitor (C1) is connected to the cathode of the first diode module (D1); the second diode module (D2) has an anode and a cathode, where the anode of the first diode module (D1), the cathode of the second diode module (D2) and the first end of the first power semiconductor (S1) are connected to each other; the third diode module (D3) has an anode and a cathode, where the negative terminal of the first DC bus capacitor (C1), the positive terminal of the second DC bus capacitor (C2), the anode of the second diode module (D2) and the cathode of the third diode module (D3) are connected to each other; the phase capacitor (C3) has a positive terminal and a negative terminal, where the second end of the first power semiconductor switch (S1), the first end of the second power semiconductor switch (S2) and the positive terminal of the phase capacitor (C3) are connected to each other, and the second end of the third power semiconductor switch (S3), the first end of the fourth power semiconductor switch (S4) and the negative terminal of the phase capacitor (C3) are connected to each other; the fourth diode module (D4) has an anode and a cathode, wherein the second end of the fourth power semiconductor switch (S4), the anode of the third diode module (D3) and the cathode of the fourth diode module (D4) are connected to each other, and the anode of the fourth power semiconductor switch (S4) is connected to the negative terminal of the second DC bus capacitor (C2).

In use, the first DC bus capacitor (C1) and the second DC bus capacitor (C2) can be connected to a common DC bus so as to output DC voltage, the phase capacitor (C3) is configured to stabilize voltage, and a node (O) serves as one phase input terminal. A control module (not shown) outputs a driving signal to control on/off states of the power semiconductor switches (S1-S4) respectively, so that the five-level rectifier 300 can operate for rectification. In another embodiment, the on/off states of the power semiconductor switches (S1-S4) can be controlled by pulse with modulation (PWM), pulse frequency modulation (PFM), pulse amplitude modulation (PAM), or the like, so that the five-level rectifier 300 can operate for rectification.

Compared to a conventional five-level converter with eight switches controlled by different driving signals in each phase, the five-level rectifier 100 as shown in Figure 4 only requires four switches controlled by less driving signals in each phase, so as to simplify the control logic.

In practice, as illustrated in Figure 4, each of the first power semiconductor switch (S1), the second power semiconductor switch (S2), the third power semiconductor switch (S3) and the fourth power semiconductor switch (S4) is an insulate gate bipolar transistor, a gate-turn-off thyristor, an integrated gate-commutated thyristor or the like, and persons having ordinary skill in the art would choose the component as desired. In addition, each of the first power semiconductor switch (S1), the second power semiconductor switch (S2), the third power semiconductor switch (S3) and the fourth power semiconductor switch (S4) has a body diode, so that the reverse current can be refluxed through the body diode when the power semiconductor switch is turned off.

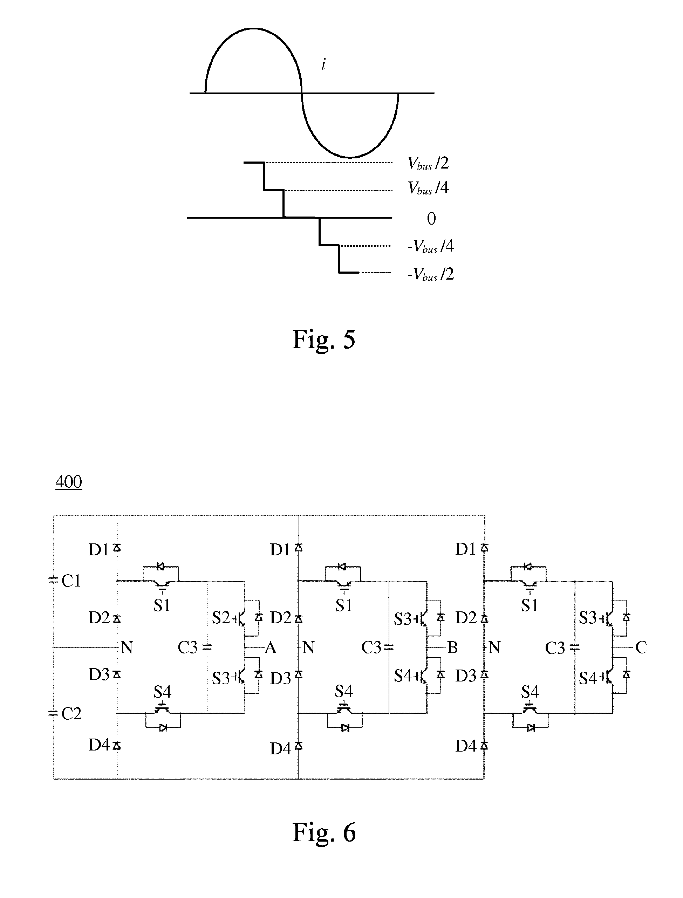

For a more complete understanding of the five-level rectifier 300, and the works thereof, with reference to Figure 5, the parameters are defined as follows. When the current (*i*) flows into the rectifier in a positive direction, the current (*i*) flows out of the rectifier in a negative direction. A voltage across the first DC bus capacitor (C1) and a voltage across the second DC bus capacitor (C2) are V_{bus}/2 each, a voltage across the phase capacitor (C3) is V_{bus}/4, and an output phase voltage V_{ON} is a potential difference between the node (O) and a midpoint (N).

With reference to Figure 5, a table of the on/off states of switching components (e.g., power semiconductor switches and diode modules) and output voltage level is shown below:

| | S1 | S2 | S3 | S4 | D1 | D2 | D3 | D4 | V_{ON} |
|---|---|---|---|---|---|---|---|---|---|
| State 1 | ON | ON | OFF | OFF | ON | OFF | OFF | OFF | V_{bus}/2 |
| State 2 | ON | OFF | ON | OFF | ON | OFF | OFF | OFF | V_{bus}/4 |
| State 3 | OFF | ON | OFF | ON | OFF | OFF | ON | OFF | V_{bus}/4 |
| State 4 | OFF | OFF | ON | ON | OFF | OFF | ON | OFF | 0 |
| State 5 | ON | ON | OFF | OFF | OFF | ON | OFF | OFF | 0 |
| State 6 | ON | OFF | ON | OFF | OFF | ON | OFF | OFF | -V_{bus}/4 |
| State 7 | OFF | ON | OFF | ON | OFF | OFF | OFF | ON | -V_{bus}/4 |
| State 8 | OFF | OFF | ON | ON | OFF | OFF | OFF | ON | -V_{bus}/2 |

In State 1, the output phase voltage V_{ON} is V_{bus}/2, and the current (*i*) flows into the rectifier, where the first power semiconductor switch (S1) and the second power semiconductor switch (S2) are turned on, and therefore the current (*i*) flows into the positive terminal of the first DC bus capacitor (C1) through an anti-parallel diode of the second power semiconductor switch (S2), an anti-parallel diode of the first power semiconductor switch (S1) and the first diode module (D1).

In States 2 and 3, the output phase voltage V_{ON} is V_{bus}/4, and the current (*i*) flows into the rectifier, in which the phase capacitor (C3) is involved in the work. For maintaining voltage stability of the phase capacitor (C3), there is a need to provide charging and discharging paths for the phase capacitor (C3).

In State 2, the first power semiconductor switch (S1) and the third power semiconductor switch (S3) are turned on, and therefore the current (*i*) flows into the positive terminal of the first DC bus capacitor (C1) through the third power semiconductor switch (S3), the phase capacitor (C3) and the anti-parallel diode of the first power semiconductor switch (S1) and the first diode module (D1). At this time, the phase capacitor (C3) is discharged.

In State 3, the second power semiconductor switch (S2) and the fourth power semiconductor switch (S4) are turned on, and therefore the current (*i*) flows into the midpoint (N) of the bus capacitors through the anti-parallel diode of the second power semiconductor switch (S2), the phase capacitor (C3), the fourth power semiconductor switch (S4) and the third diode module (D3). At this time, the phase capacitor (C3) is charged.

In State 4, the output phase voltage V_{ON} is zero, and the current (*i*) flows into the rectifier, in which the third power semiconductor switch (S3), the fourth power semiconductor switch (S4) and the third diode module (D3) are turned on, and therefore the current (*i*) flows into the midpoint (N) of the bus capacitors through the third power semiconductor switch (S3), the fourth power semiconductor switch (S4) and the third diode module (D3).

In State 5, the output phase voltage V_{ON} is zero, and the current (*i*) flows out of the rectifier, in which the first power semiconductor switch (S1) and the second power semiconductor switch (S2) are turned on, and therefore the current (*i*) flows from the midpoint (N) of the bus capacitors to the second diode module (D2), the first power semiconductor switch (S1) and the second power semiconductor switch (S2) sequentially.

In States 6 and 7, the output phase voltage V_{ON} is -V_{bus}/4, and the current (*i*) flows out of the rectifier, in which the phase capacitor (C3) is involved in the work. For maintaining voltage stability of the phase capacitor (C3), there is a need to provide charging and discharging paths for the phase capacitor (C3).

In State 6, the first power semiconductor switch (S1) and the third power semiconductor switch (S3) are turned on, and therefore the current (*i*) flows from the midpoint (N) of the bus capacitors to the second diode module (D2), the first power semiconductor switch (S1), the phase capacitor (C3), the anti-parallel diode of the third power semiconductor switch (S3) sequentially. At this time, the phase capacitor (C3) charges.

In State 7, the second power semiconductor switch (S2) and the fourth power semiconductor switch (S4) are turned on, and therefore the current (*i*) flows from the negative terminal of the second DC bus capacitor (C2) to the fourth diode module (D4), the anti-parallel diode of the fourth power semiconductor switch (S4), the phase capacitor (C3) and the second power semiconductor switch (S2) sequentially. At this time, the phase capacitor (C3) discharges.

In State 8, the output phase voltage V_{ON} is -V_{bus}/2, and the current (*i*) flows out of the rectifier, where the third power semiconductor switch (S3) and the fourth power semiconductor switch (S4) are turned on, and therefore the current (*i*) flows from the negative terminal of the second DC bus capacitor (C2) to the fourth diode module (D4), the anti-parallel diode of the fourth power semiconductor switch (S4) and the anti-parallel diode of the third power semiconductor switch (S3) sequentially.

Figure 6 is a circuit diagram illustrating a three-phase five-level rectifier 400 based on circuit topology of aforesaid bridge arm of the five-level rectifier of Figure 4. As illustrated in Figure 6, nodes (A), (B) and (C) are three phase input terminal. The midpoint N of each bridge arm (i.e., a connection point connects the anode of second diode module (D2) and the cathode of the third diode module (D3)) is connected to the midpoint N of the bus capacitors (i.e., a connection point connects the negative terminal of the first DC bus capacitor (C1) and the positive terminal of the second DC bus capacitor (C2)). Accordingly, each phase bridge arm requires only one DC voltage source, so as to solve or circumvent the problems and disadvantages in conventional CHB or MMC technology applied in the five-level topology.

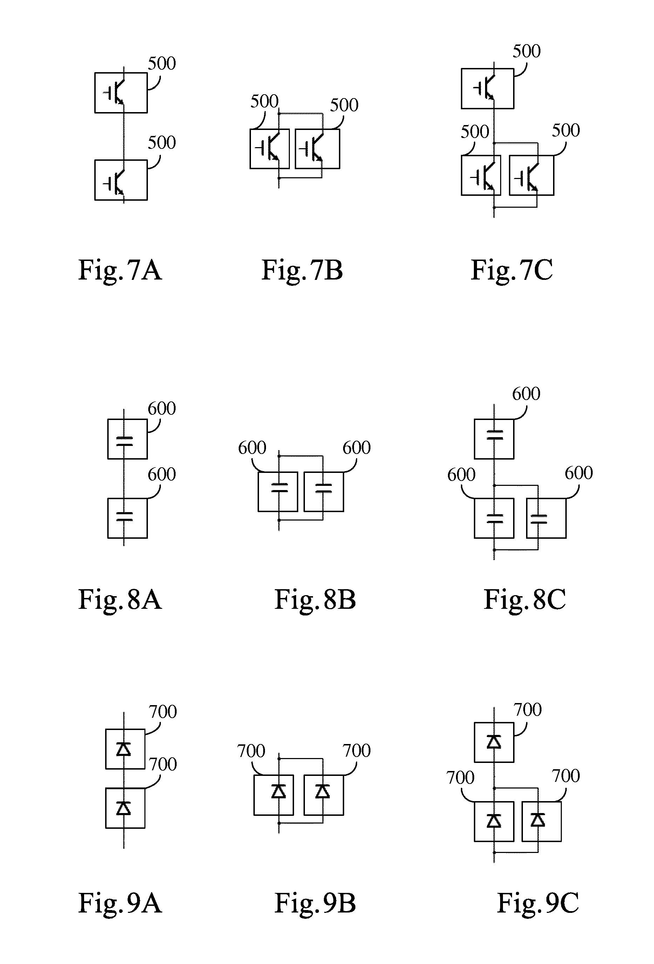

Figures 7A, 7B and 7C respectively illustrate the circuit structure of the power semiconductor switch according to the first embodiment of the present disclosure. In practice, any one of power semiconductor switches (S1-S6) as mentioned previously in above embodiments may include one or more insulate gate bipolar transistors 500 that are connected in series (shown in Figure 7A), parallel (shown in Figure 7B) or a combination of series and parallel (shown in Figure 7C). It should be noted that the insulate gate bipolar transistors 500 are shown in Figures 7A, 7B and 7C for illustrative purposes only, and the present invention is not limited thereto. Persons having ordinary skill in the art would adjust the number and connection types of the insulate gate bipolar transistors 500 as desired.

Figures 8A, 8B and 8C respectively illustrate the circuit structure of a capacitor according to the first embodiment of the present disclosure. In practice, any one of the first DC bus capacitor (C1), the second DC bus capacitor (C2) and the phase capacitor (C3) as mentioned previously in above embodiments may include one or more capacitive elements 600 that are connected in series (shown in Figure 8A), parallel (shown in Figure 8B) or a combination of series and parallel (shown in Figure 8C). It should be noted that the capacitive elements 600 are shown in Figures 8A, 8B and 8C for illustrative purposes only, and the present invention is not limited thereto. Persons having ordinary skill in the art would adjust the number and connection types of the capacitive elements 600 as desired.

Figures 9A, 9B and 9C respectively illustrate the circuit structure of a diode module according to the first embodiment of the present disclosure. In practice, any one of diode modules (D1-D4) as mentioned previously in above embodiments may include one or more diodes 700 (e.g., power diodes) that are connected in series (shown in Figure 9A), parallel (shown in Figure 9B) or a combination of series and parallel (shown in Figure 9C). It should be noted that the diodes 700 are shown in Figures 9A, 9B and 9C for illustrative purposes only, and the present invention is not limited thereto. Persons having ordinary skill in the art would adjust the number and connection types of the diodes 700 as desired.

In view of the above, the present disclosure is directed to provide simply structured five-level rectifiers applied in an electric circuit without energy feedback, in which each five-level rectifier has less power semiconductor switches for simplifying the control logic, as well as improving harmonic and electromagnetic interference, and power quality; each phase bridge arm requires only one DC voltage source.

## Claims

1. A five-level converter (100), **characterized by** comprising:
a first power semiconductor switch (S1) having a first end and a second end;
a second power semiconductor switch (S2) having a first end and a second end;
a third power semiconductor switch (S3) having a first end and a second end, wherein the second end of the second power semiconductor switch (S2) is connected to the first end of the third power semiconductor switch (S3);
a fourth power semiconductor switch (S4) having a first end and a second end;
a fifth power semiconductor switch (S5) having a first end and a second end ;
a sixth power semiconductor switch (S6) having a first end and a second end;
a first diode module (D1) having an anode and a cathode, wherein the anode of the first diode module (D1), the first end of the first power semiconductor switch (S1) and the first end of the fifth power semiconductor switch (S5) are connected to each other;
a first direct-current (DC) bus capacitor (C1) having a positive terminal and a negative terminal, wherein the positive terminal of the first DC bus capacitor (C1) is connected to the cathode of the first diode module;
a second DC bus capacitor (C2) having a positive terminal and a negative terminal, wherein the negative terminal of the first DC bus capacitor (C1), the positive terminal of the second DC bus capacitor (C2), the second end of the fifth power semiconductor switch (S5) and the first end of the sixth power semiconductor switch (S6) are connected to each other;
a phase capacitor (C3) having a positive terminal and a negative terminal, wherein the second end of the first power semiconductor switch (S1), the first end of the second power semiconductor switch (S2) and the positive terminal of the phase capacitor (C3) are connected to each other, and the second end of the third power semiconductor switch (S3), the first end of the fourth power semiconductor switch (S4) and the negative terminal of the phase capacitor (C3) are connected to each other; and
a second diode module (D2) having an anode and a cathode, wherein the second end of the sixth power semiconductor switch (S6), the second end of the fourth power semiconductor switch (S4) and the cathode of the second diode module (D2) are connected to each other, and the anode of the second diode module (D2) is connected to the negative terminal of the second DC bus capacitor (C2).

2. The five-level converter (100) of claim 1, **characterized in that** each of the first power semiconductor switch (S1), the second power semiconductor switch (S2), the third power semiconductor switch (S3), the fourth power semiconductor switch (S4), the fifth power semiconductor switch (S5) and the sixth power semiconductor switch (S6) is an insulate gate bipolar transistor, a gate-turn-off thyristor, or an integrated gate-commutated thyristor.

3. The five-level converter (100) of claim 1, **characterized in that** each of the first power semiconductor switch (S1), the second power semiconductor switch (S2), the third power semiconductor switch (S3), the fourth power semiconductor switch (S4), the fifth power semiconductor switch (S5) and the sixth power semiconductor switch (S6) comprises a plurality of insulate gate bipolar transistors (500) that are connected in series, parallel or a combination of series and parallel.

4. The five-level converter (100) of claim 1, **characterized in that** each of the first DC bus capacitor (C1), the second DC bus capacitor (C2) and the phase capacitor (C3) comprises a plurality of capacitive elements (600) that are connected in series, parallel or a combination of series and parallel.

5. The five-level converter of claim 1, **characterized in that** each of the first diode module (D1) and the second diode module (D2) comprises a plurality of diodes (700) that are connected in series, parallel or a combination of series and parallel.

6. A three-phase five-level rectifier (200), **characterized by** comprising three phase bridge arms, wherein each of the three phase bridge arms is the five-level rectifier (100) of claim 1, and the three phase bridge arms are connected in parallel.

7. A five-level converter (300), **characterized by** comprising:
a first power semiconductor switch (S1) having a first end and a second end;
a second power semiconductor switch (S2) having a first end and a second end;
a third power semiconductor switch (S3) having a first end and a second end, wherein the second end of the second power semiconductor switch (S2) is connected to the first end of the third power semiconductor switch (S3);
a fourth power semiconductor switch (S4) having a first end and a second end;
a first DC bus capacitor (C1) having a positive terminal and a negative terminal;
a second DC bus capacitor (C2) having a positive terminal and a negative terminal;
a first diode module (D1) having an anode and a cathode, wherein the positive terminal of the first DC bus capacitor is connected to the cathode of the first diode module;
a second diode module (D2) having an anode and a cathode, wherein the anode of the first diode module, the cathode of the second diode module (D2) and the first end of the first power semiconductor (S1) are connected to each other;
a third diode module (D3) having an anode and a cathode, wherein the negative terminal of the first DC bus capacitor (C1), the positive terminal of the second DC bus capacitor (C2), the anode of the second diode module (D2) and the cathode of the third diode module (D3) are connected to each other;
a phase capacitor (C3) having a positive terminal and a negative terminal, wherein the second end of the first power semiconductor switch (S1), the first end of the second power semiconductor switch (S2) and the positive terminal of the phase capacitor (C3) are connected to each other, and the second end of the third power semiconductor switch (S3), the first end of the fourth power semiconductor switch (S4) and the negative terminal of the phase capacitor (C3) are connected to each other; and
a fourth diode module (D4) having an anode and a cathode, wherein the second end of the fourth power semiconductor switch (S4), the anode of the third diode module (D3) and the cathode of the fourth diode module (D4) are connected to each other, and the anode of the fourth power semiconductor switch (S4) is connected to the negative terminal of the second DC bus capacitor (C2).

8. The five-level converter of claim 7, **characterized in that** each of the first power semiconductor switch, the second power semiconductor switch, the third power semiconductor switch and the fourth power semiconductor switch is an insulate gate bipolar transistor, a gate-turn-off thyristor, or an integrated gate-commutated thyristor.

9. The five-level converter (300) of claim 7, **characterized in that** each of the first power semiconductor switch (S1), the second power semiconductor switch (S2), the third power semiconductor switch (S3) and the fourth power semiconductor switch (S4) comprises a plurality of insulate gate bipolar transistors (500) that are connected in series, parallel or a combination of series and parallel.

10. The five-level converter of claim 7, **characterized in that** each of the first DC bus capacitor (C1), the second DC bus capacitor (C2) and the phase capacitor (C3) comprises a plurality of capacitive elements (600) that are connected in series, parallel or a combination of series and parallel.

11. The five-level converter of claim 7, **characterized in that** each of the first diode module (D1), the second diode module (D2), third diode module (D3) and the fourth diode module (D4) comprises a plurality of diodes (700) that are connected in series, parallel or a combination of series and parallel.

12. A three-phase five-level rectifier (400), **characterized by** comprising three phase bridge arms, wherein each of the three phase bridge arms is the five-level rectifier (300) of claim 7, and the three phase bridge arms are connected in parallel.
